# EUROPEAN PATENT SPECIFICATION

(11) **EP 2 581 583 B1**
(45) Date of publication and mention of the grant of the patent: **30.11.2016**
(21) Application number: 12187232.9
(22) Date of filing: 04.10.2012
(51) Int. Cl.: F02C 3/34, F02C 9/28, F23N 5/00

(54) **Method for operating a gas turbine and gas turbine**
Verfahren zum Betrieb einer Gasturbine und Gasturbine
Procédé d'exploitation d'une turbine à gaz et turbine à gaz

(30) Priority: 14.10.2011 CH 16762011
(43) Date of publication of application: 17.04.2013
(73) Proprietor: General Electric Technology GmbH, 5400 Baden (CH)
(72) Inventor: Güthe, Felix, 4056 Basel (CH); Stankovic, Dragan, 5415 Nussbaumen (CH); Gumprecht-Liebau, Meike, 5406 Baden-Rütihof (CH)
(74) Representative: Bernotti, Andrea

(56) References cited:
- EP-A1- 0 478 481
- EP-A1- 2 107 305
- EP-A1- 2 287 456
- EP-A2- 1 531 243
- WO-A1-2010/044958
- US-A- 5 024 055
- US-A1- 2010 115 960
- US-B2- 7 503 178

## Description

### Background of the invention

The present invention relates to the technology of gas turbines. It refers to a method for operating a gas turbine according to the preamble of claim 1. It further refers to a gas turbine for carrying out said method.

### Prior Art

When flue gas recirculation (FGR) is used in a gas turbine, i.e. a part of the flue gas at the exit of the gas turbine is recirculated back to the entrance and mixed with fresh gas (air), the O₂ content is reduced, thereby limiting the operation due to incomplete combustion and resulting in high CO emissions.

Furthermore in the combustor of the gas turbine specific parts might be affected by rich and 02 depleted parts of the gas stream. To identify this region and operating regimes is useful in operating the gas turbine in a safe mode ensuring long lifetime.

The control of the FGR ratio is a demanding task for the operation. For operating the engine, a measure of FGR ratio is needed. If not on mass flow directly this could be done via the O₂ content at the entrance of the compressor.

The use of O₂ sensors for flame supervision has already been disclosed in the prior art (see document EP 2 107 305). The measurement of O₂ concentrations in this document is limited to the determination of the flame temperatures (T_{flame}). Not mentioned is the application for FGR to prevent combustion regimes of rich stoichiometry.

A device for detecting combustion conditions in a plurality of combustors in a gas turbine is disclosed in document US 5 024 055. In place of a temperature sensor a plurality of sensors capable of measuring the concentration of unburnt components in the combustion gas is arranged at the downstream end of the gas turbine. In so doing the combustion conditions in the combustors are known from a distribution pattern of measured concentration of the unburnt component. This arrangement makes it possible to detect any abnormal combustion in combustors which only hardly can be detected by temperature sensors. This document fails to disclose a use of this device for gas turbines with sequential combustion.

Patent application US 2010 115 960 discloses an arrangement for carrying out a method for flue gas recirculation based on a gas turbine installation with sequential combustion and additionally an arrangement for carrying out a method for flue gas recirculation based on a gas turbine with subsequent combustion with dilution of the fuel gas. The portion of recirculated flue gas mass flow is controlled by means of at least one suitable control element. The control reference value can be the residual oxygen content of the flue gas. At least one means to determine the residual oxygen in the flue gas, in the compressor inlet air or in the combustion chamber inlet is provided. This means can be a measuring instrument for direct oxygen measuring, an online gas analysis or a device for indirect determination.

WO 2010 044 958 discloses a method and a system for controlling a combustion reaction between a fuel stream and an oxygenation stream substantially comprising oxygen and carbon dioxide. The combustion products are detected by a temperature sensor and an oxygen analyser, the data from which are used to control the flow and the composition of the oxygenation stream and the fuel stream into the combustor.

It would be of great value to implement a fast, low cost and reliable sensor for measurement of the species concentration (particularly O₂) at several points in the gas turbine and use these measurements for gas turbine control and/or optimisation of the combustion performance.

With additional sensors the gas turbine would be enabled to approach the limits of operation.

For the combustor, the use of ZrO₂ sensors could also be used locally to avoid lifetime reduction due to reducing atmospheres and to homogenise flames. Such ZrO₂ sensors would be used similar to 3-way catalysts in cars for optimisation of operation.

### Summary of the Invention

It is an object of the present invention to provide a method for operating a gas turbine, which enables an improved gas turbine control and performance.

This object is obtained by a method according to claim 1 for operating a gas turbine of the sequential-combustion-type with two combustors and two turbines and flue gas recirculation, wherein a CO₂-containing gas is compressed in a compressor, the compressed gas is used to burn a fuel in subsequent combustion chamber, and the hot combustion gases are used to drive at least one turbine, characterised in that the species concentration of the gas mixture flowing through the gas turbine is measured at several points within the gas turbine by means of a plurality of species concentration sensors provided in a distributed circumferential arrangement within the first combustor, and the measured concentration values are utilised to control the gas turbine and/or optimise the combustion performance of said gas turbine.

According to the invention at least the O₂ concentration is measured by means of said plurality of species concentration sensors to determine the O₂ profile inside the first combustor.

According to a first embodiment of the invention ZrO₂ sensors are used as said species concentration sensors.

According to an embodiment of the inventive gas turbine according to claim 3, fuel supply valves are provided at a fuel supply of the second burners, and said fuel supply valves are operated by said control unit in accordance with the measurements of said species concentration sensors.

Said species concentration sensors are arranged at distributed circumferential positions with respect to the axis of the gas turbine, and inside the first combustor.

Especially, said species concentration sensors are ZrO₂ sensors.

### Brief Description of the Drawings

The present invention is now to be explained more closely by means of different embodiments and with reference to the attached drawings.
- Fig. 1: shows a longitudinal cross section of a gas turbine with sequential combustion and flue gas recirculation according to an embodiment of the invention; and
- Fig. 2: in a view in axial direction a preferred circumferential distribution of other species concentration sensors of the invention.

### Detailed Description of different embodiments of the invention

In general, there are several possibilities of utilising ZrO₂ sensors for fast O₂ measurements in a gas turbine.

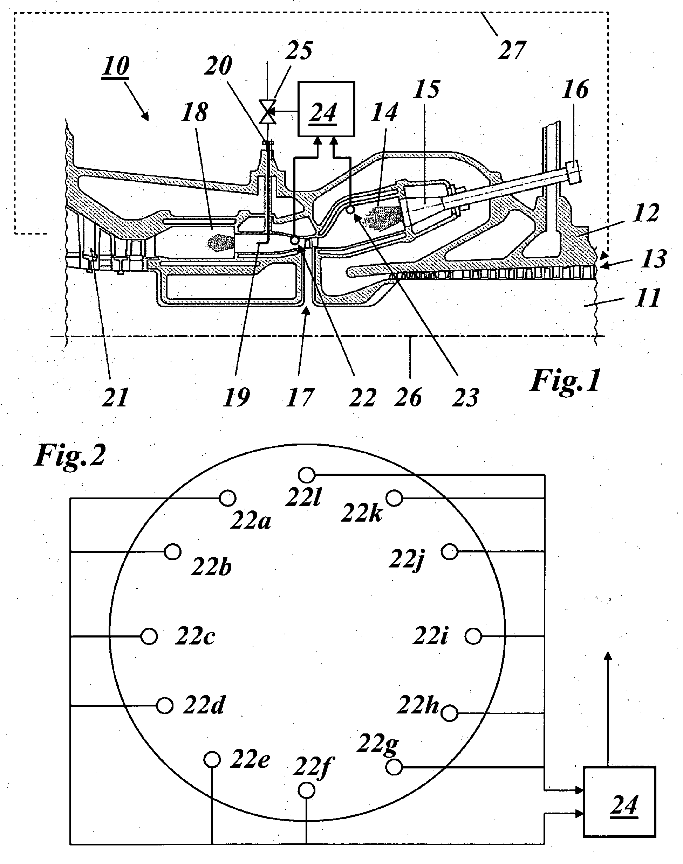

The present invention is directed to achieving homogeneity of the gas stream at the exit of the combustor in a gas turbine with sequential combustion and flue gas recirculation. The simplified scheme of such a gas turbine is shown in Fig. 1: The gas turbine 10 of Fig. 1 comprises a rotor 11 with an axis 26 being surrounded by an inner casing 12. A compressor 13 compresses the incoming working gas. The compressed gas enters a first combustor 14, 15 with a first combustion chamber 14 and first burners 15, which receive their fuel at a fuel input 16. The hot combustion gases of the first combustor 14, 15 flow through a first turbine 17 and enter a second combustor 18, 19 with the second combustion chamber 18 and second burners 19, which receive their fuel and a fuel input 20. The hot combustion gases of the second combustor 18, 19 flow through a second turbine 21 to leave the gas turbine 10 as flue gas. Part of the flue gas is recirculated by recirculating means 27 (dashed line) to the entrance of the compressor 13 to be mixed there with fresh gas or air.

The species concentrations of for example CO₂, CO, NOx and especially the O₂ content in the combustor exit plane of the first combustor 14, 15 will probably exhibit some (off design) distribution when measured with fast ZrO₂ probes (or any other fast sensor) due to an inhomogeneous distribution of fuel in the first and second combustor 14, 15 and 18, 19, asymmetric cooling air flows and perhaps an asymmetric O₂ pattern at the inflow after mixing recirculated and fresh gas.

This leads to inhomogeneous distribution of O₂ and fuel and therefore leads to high CO emissions for the engine, thereby limiting the engine operation range. To mitigate this, the fuel flow of the second combustor 18, 19 may be controlled based on the following measurement:
The measurement of the O₂ profile after the first turbine 17 (with species concentration sensors 22 or 22a-I of Fig. 2) near the turbine outlet temperature 1 (TAT1) enables to identify rich and lean zones in the combustor 14, 15. Near the limit the O₂ concentrations to be measured will be between 2 and 6%, where 2-3% O₂ are added by the turbine cooling. This measurement requires several probes and a medium accuracy, since the expected signal is not as sensitive as near the stoichiometry inside the combustor. However the measurement at atmospheric pressure with fresh air as reference will be unproblematic to yield measurements of reasonable accuracy. In addition, other species like CO₂, H₂O, NOx, CO, etc. and the temperature T may be measured.

The invention teaches an alternative measurement of the O₂ profile, a measurement inside the first combustor 14, 15 (with species concentration sensors 23). This measurement is more critical since the choice of reference air as well as temperature and pressure is critical. All parameters have an impact on the signal. However, since the goal is to identify spots, where the stoichiometry switches from lean to rich, a very strong change in signal can be expected locally. Therefore even a more problematic and less accurately calibrated signal will exhibit a jump near stoichiometry, which very comfortably enables to alter the fuel flow or take other measures to influence the Lambda profile locally. In principle, this method can also be used to extract local T_{flame} measures as disclosed in the already mentioned document EP 2 107 305.

The species concentration sensors 22 or 23, which are of the ZrO₂-type used as Lambda sensors for the ICEs (Internal Combustion Engine) of cars, are provided within the first combustion chamber 14 (sensors 23) in a circumferential distribution, as is shown in Fig. 2 for the plurality of sensors 22a-I. They are connected to a control unit 24, which controls fuel supply valves 25 at the fuel supply of the second burners 16 (see Fig. 1).

In this way, the control of the gas turbine control and/or the combustion performance can be optimised.

With additional sensors the gas turbine 10 is enabled to approach the limits of operation.

For the combustor, the use of ZrO₂ sensors helps locally to avoid lifetime reduction due to reducing atmospheres and to homogenise flames.

### List of Reference numerals

- 10 gas: turbine with sequential combustion
- 11: rotor
- 12: inner casing
- 13: compressor
- 14,18: combustion chamber
- 15,19: burner
- 16,20: fuel input
- 17,21: turbine
- 22,23: species concentration sensor (e.g. ZrO₂ sensor)
- 22a-I: species concentration sensor
- 24: control unit
- 25: fuel supply valve
- 26: axis
- 27: recirculating means

## Claims

1. A method for operating a gas turbine (10), wherein a CO₂-containing gas is compressed in a compressor (13), the compressed gas is used to burn a fuel in at least one subsequent combustion chamber (14, 18), and the hot combustion gases are used to drive at least one turbine (17, 21), wherein the species concentration of the gas mixture flowing through the gas turbine (10) is measured at several points within the gas turbine (10) by means of a plurality of species concentration sensors (22; 22a-I; 23) provided in a distributed arrangement, and the measured concentration values are utilised to control the gas turbine (10) and/or optimise the combustion performance of said gas turbine (10), wherein the gas turbine (10) is of the sequential-combustion-type with two combustors (14, 15; 18, 19) and two turbines (17, 21) respectively and flue gas recirculation, whereby at least part of the flue gas at the exit of the gas turbine (10) is recirculated and enters the compressor (13) after being mixed with fresh gas, the concentration of O₂ is measured by means of said plurality of species concentration sensors (22; 22a-I; 23), and the fuel flow into the second combustor (18, 19) is controlled based on the measured species concentrations, **characterised in that** the O₂ profile is measured inside the first combustor (14, 15).

2. Method according to claim 1, **characterised in that** ZrO₂ sensors are used as said species concentration sensors (22; 22a-I; 23).

3. Gas turbine (10) for carrying out the method according to claims 1 to 2, comprising a compressor (13), a first combustor (14, 15) with a first combustion chamber (14) and first burners (15), a first turbine (17) downstream of said first combustor (14, 15), a second combustor (18, 19) with a second combustion chamber (18) and second burners (19) downstream of said first turbine (17), a second turbine (21) downstream of said second combustor (18, 19), and means for recirculating part of the flue gas from the exit of the gas turbine (10) to its entrance, wherein a plurality of species concentration sensors (22; 22a-I; 23) is arranged within the gas flow of the gas turbine (10), and the species concentration sensors (22; 22a-I; 23) are connected to a control unit (24), which controls the operation of the gas turbine (10) and wherein fuel supply valves (25) are provided at a fuel supply of the second burners (19), and said fuel supply valves (25) are operated by said control unit (24) in accordance with the measurements of said species concentration sensors (22; 22a-I; 23), **characterised in that** said species concentration sensors (23) are arranged at distributed circumferential positions with respect to the axis (26) of the gas turbine and inside the first combustor (14, 15).

4. Gas turbine according to claim 3, **characterised in that** said species concentration sensors (22; 22a-I; 23) are ZrO₂ sensors.

## Patentansprüche

1. Verfahren für den Betrieb einer Gasturbine (10), wobei ein CO₂ enthaltendes Gas in einem Verdichter (13) verdichtet wird, das verdichtete Gas zum Verbrennen eines Kraftstoffs in mindestens einer nachfolgenden Brennkammer (14, 18) verwendet wird und die heißen Verbrennungsgase zum Antreiben mindestens eine Turbine (17, 21) verwendet werden, wobei die Spezieskonzentration des durch die Gasturbine (10) strömenden Gasgemisches an mehreren Punkten innerhalb der Gasturbine (10) mittels einer Mehrzahl von Spezieskonzentrationssensoren (22; 22a-l; 23) gemessen wird, die in einer verteilten Anordnung vorgesehen sind, und die gemessenen Konzentrationswerte zur Regelung der Gasturbine (10) und/oder Optimierung der Verbrennungsleistung der Gasturbine (10) genutzt werden, wobei die Gasturbine (10) der Bauart mit sequenzieller Verbrennung mit jeweils zwei Brennkammern (14, 15; 18, 19) und zwei Turbinen (17, 21) und mit Abgasrückführung entspricht, wodurch mindestens ein Teil des Abgases am Ausgang der Gasturbine (10) zurückgeführt wird und in den Verdichter (13) eintritt, nachdem es mit Frischgas gemischt wurde, wobei die Konzentration von O₂ mittels der Mehrzahl von Spezieskonzentrationssensoren (22; 22a-l; 23) gemessen wird und der Kraftstoffstrom in der zweiten Brennkammer (18, 19) auf der Grundlage der gemessenen Spezieskonzentrationen geregelt wird, **dadurch gekennzeichnet, dass** das O₂-Profil innerhalb der ersten Brennkammer (14, 15) gemessen wird.

2. Verfahren nach Anspruch 1, **dadurch gekennzeichnet, dass** ZrO₂-Sensoren als die Spezieskonzentrationssensoren (22; 22a-l; 23) verwendet werden.

3. Gasturbine (10) zur Durchführung des Verfahrens nach den Ansprüchen 1 bis 2, enthaltend einen Verdichter (13), eine erste Brennkammer (14, 15) mit einem ersten Brennraum (14) und ersten Brennern (15), eine erste Turbine (17) stromabwärts der ersten Brennkammer (14, 15), eine zweite Brennkammer (18, 19) mit einem zweiten Brennraum (18) und zweiten Brennern (19) stromabwärts der ersten Turbine (17), eine zweite Turbine (21) stromabwärts der zweiten Brennkammer (18, 19) und eine Einrichtung zum Rückführen eines Teils der Abgase von dem Ausgang der Gasturbine (10) zu ihrem Eingang, wobei eine Mehrzahl von Spezieskonzentrationssensoren (22; 22a-l; 23) innerhalb des Gasstroms der Gasturbine (10) angeordnet ist und die Spezieskonzentrationssensoren (22; 22a-l; 23) mit einer Steuereinheit (24) verbunden sind, die den Betrieb der Gasturbine (10) regelt, und wobei Kraftstoffzufuhrventile (25) an einer Kraftstoffzufuhr der zweiten Brenner (19) vorgesehen sind und die Kraftstoffzufuhrventile (25) durch die Steuereinheit (24) in Übereinstimmung mit den Messungen der Spezieskonzentrationssensoren (22; 22a-l; 23) betätigt werden, **dadurch gekennzeichnet, dass** die Spezieskonzentrationssensoren (22; 22a-l; 23) an verteilten Umfangspositionen in Bezug auf die Achse (26) der Gasturbine und innerhalb der ersten Brennkammer (14, 15) angeordnet sind.

4. Gasturbine nach Anspruch 3, **dadurch gekennzeichnet, dass** die Spezieskonzentrationssensoren (22; 22a-l; 23) ZrO₂-Sensoren sind.

## Revendications

1. Procédé d'exploitation d'une turbine à gaz (10), dans lequel un gaz contenant du CO2 est comprimé dans un compresseur (13), le gaz comprimé est utilisé pour brûler un carburant dans au moins une chambre de combustion (14, 18) suivante et les gaz de combustion chauds sont utilisés pour entraîner au moins une turbine (17, 21), la concentration des espèces du mélange de gaz s'écoulant à travers la turbine à gaz (10) étant mesurée au niveau de plusieurs points à l'intérieur de la turbine à gaz (10) au moyen d'une pluralité de capteurs de concentration d'espèces (22 ; 22a-I ; 23) également répartis et les valeurs de concentration mesurées sont utilisées pour contrôler la turbine à gaz (10) et/ou pour optimiser la performance de combustion de ladite turbine à gaz (10), la turbine à gaz (10) étant à combustion séquentielle avec deux carburateurs (14, 15 ; 18, 19) et deux turbines (17, 21) respectivement et un recyclage des gaz de combustion, au moins une partie des gaz de combustion à la sortie de la turbine à gaz (10) étant recyclée et entre dans le compresseur (13) après avoir été mélangée avec du gaz frais, la concentration en 02 étant mesurée au moins de ladite pluralité de capteurs de concentration d'espèces (22 ; 22a-I ; 23) et le débit de carburant vers le deuxième carburateur (18, 19) est contrôlé sur la base des concentrations d'espèces mesurées, **caractérisé en ce que** le profil de 02 est mesuré à l'intérieur du premier carburateur (14, 15).

2. Procédé selon la revendication 1, **caractérisé en ce que** des capteurs de Zr02 sont utilisés en tant que capteurs de concentrations d'espèces (22 ; 22a-I ; 23).

3. Turbine à gaz (10) permettant de réaliser le procédé selon les revendications 1 à 2, comprenant un compresseur (13), un premier carburateur (14, 15) avec une première chambre de combustion (14) et des premiers brûleurs (15), une première turbine (17) en aval dudit premier carburateur (14, 15), un deuxième carburateur (18, 19) avec une deuxième chambre de combustion (18) et des deuxièmes brûleurs (19) en aval de ladite première turbine (17), une deuxième turbine (21) en aval dudit deuxième carburateur (18, 19) et des moyens pour le recyclage d'une partie des gaz de combustion de la sortie de la turbine à gaz (10) vers son entrée, une pluralité de capteurs de concentration d'espèces (22 ; 22a-I ; 23) étant disposée à l'intérieur de l'écoulement de gaz de la turbine à gaz (10) et les capteurs de concentration d'espèces (22 ; 22a-I ; 23) étant connectée à une unité de commande (24), qui contrôle le fonctionnement de la turbine à gaz (10) et des soupapes d'alimentation en carburant (25) étant prévues au niveau d'une alimentation en carburant des deuxièmes brûleurs (19), et lesdites soupapes d'alimentation en carburant (25) étant actionnées par ladite unité de commande (24) en fonction des mesures desdits capteurs de concentration d'espèces (22 ; 22a-I;23), **caractérisé en ce que** lesdits capteurs de concentration d'espèces (23) sont disposés à des positions réparties sur la circonférence par rapport à l'axe (26) de la turbine à gaz et à l'intérieur du premier carburateur (14, 15).

4. Turbine à gaz selon la revendication 3, **caractérisé en ce que** lesdits capteurs de concentration d'espèces (22 ; 22a-I ; 23) sont des capteurs de Zr02.
